# EUROPEAN PATENT APPLICATION

(11) **EP 4 687 068 A1**
(43) Date of publication of application: **04.02.2026**
(21) Application number: 25190033.8
(22) Date of filing: 16.07.2025
(51) Int. Cl.: G06K 19/077, G06K 7/10

(54) **RFID COUPLER AND ASSOCIATED RFID ENABLED DEVICE**

(30) Priority: 30.07.2024 IN 202411057651
(71) Applicant: Hand Held Products, Inc., Charlotte, NC 28202 (US)
(72) Inventor: GODAWARTHY, Kailash Kashyap, Charlotte, 28202 (US); PANDEY, Pankaj Kumar, Charlotte, 28202 (US); RAVILLA, Sridhar, Charlotte, 28202 (US)
(74) Representative: Haseltine Lake Kempner LLP

(57) **Abstract**

A coupler for a radio frequency identification (RFID) enabled system adapted to couple a transceiver of the RFID enabled system with a targeted transponder from among a group of multiple adjacent transponders is provided. Such an RFID coupler may be adapted to transmit controlled power that can be used to locate the targeted transponder. Such an RFID coupler may have a restricted position and placement to facilitate near-field communication in a focused direction. For example, a coupler may include first and second ground planes on opposing sides of the coupler and a conductive strip for propagating a plurality of electromagnetic fields. The conductive strip has a bottom edge having a first tapered edge portion, a second tapered edge portion, and a center portion therebetween. The first and second tapered edge portions are mirror images of each other and each comprise two or more steps.

## Description

### FIELD OF THE INVENTION

Embodiments of the present disclosure generally relate to radio frequency identification (RFID) couplers, and, more particularly, to RFID couplers for printer-encoders.

### BACKGROUND

RFID enabled printer-encoders are used to print indicia (typically using a thermal printhead) on labels, tags, tickets, cards, or other types of media (referred to herein generically as media units). Such media units may be conveyed through the printer-encoder and past the printhead on a web (also termed a liner or carrier), however, in alternate embodiments, such a liner or carrier may not be needed. Such indicia may include text, numbers, barcodes, graphics, etc.

Each of such media units often include a corresponding RFID transponder and an integrated circuit (IC) for storing data written and/or read via the RFID transponder. In addition to printing indicia on such media units, an RFID printer-encoder may also encode data on the IC via the corresponding RFID transponder.

The RFID transponder is excited using an RFID near-field coupler (referred to herein simply as a coupler). This coupler needs to be carefully located within the printer-encoder to be able to communicate with the desired RFID transponder. As the pitch (i.e., the distance from one media unit to the next media unit) decreases, the placement of the coupler become more challenging to ensure that the coupler communicates with only one RFID transponder at a time.

Such RFID couplers are plagued by technical challenges and limitations. Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to couplers for RFID enabled systems and associated RFID enabled systems such as RFID printer-encoders. Various embodiments of the present disclosure provide an RFID coupler which may be used in RFID enabled devices to communicate with a selected transponder from among a group of multiple adjacent transponders. Various embodiments of the present disclosure provide an RFID coupler adapted to transmit controlled power that can be used to locate the targeted transponder. Various embodiments of the present disclosure provide an RFID coupler that has a restricted position and placement to facilitate near-field communication in a particular focused direction.

In accordance with various embodiments of the present disclosure, a coupler for an RFID enabled system adapted to couple a transceiver of the RFID enabled system with a targeted transponder from among a group of multiple adjacent transponders is provided. In some embodiments, a coupler may include a first ground plane and a second ground plane on opposing sides of the coupler and a conductive strip for propagating a plurality of electromagnetic fields. The conductive strip is positioned at least partially between the first and second ground planes. The conductive strip has a bottom edge having a first tapered edge portion, a second tapered edge portion, and a center portion therebetween. The second tapered edge portion is a mirror image of the first tapered edge portion. Each of the first and second tapered edge portions comprise two or more steps.

In some embodiments, the coupler further comprises a first printed circuit board sandwiched between the first ground plane and the conductive strip, and a second printed circuit board sandwiched between the second ground plane and the conductive strip.

In some embodiments, each of the two or more steps of each of the first and second tapered edge portions are squared.

In some embodiments, each of the two or more steps of each of the first and second tapered edge portions are convex.

In some embodiments, each of the two or more steps of each of the first and second tapered edge portions are concave.

In some embodiments, each of the two or more steps of each of the first and second tapered edge portions are angled.

In some embodiments, the center portion of the bottom edge is straight.

In some embodiments, the center portion of the bottom edge is convex.

In some embodiments, the center portion of the bottom edge is concave.

In some embodiments, the RFID enabled system is a printer.

In accordance with various embodiments of the present disclosure, an RFID printer-encoder adapted to print and encode a plurality of media units, at least some of the plurality of media units comprising an RFID transponder, is provided. In some embodiments, the printer-encoder comprises a printhead for printing indicia onto the media units, a media conveyance system adapted to convey the plurality of media units to the printhead and a transponder encoding region along a feed path in a feed direction, a transceiver configured to provide communication signals corresponding to information to be encoded on the RFID transponder, and a coupler electrically connected to the transceiver and adapted to encode a targeted transponder in the transponder encoding region. The coupler comprises a first ground plane and a second ground plane on opposing sides of the coupler and a conductive strip for propagating a plurality of electromagnetic fields. The conductive strip is positioned at least partially between the first and second ground planes. The conductive strip has a bottom edge having a first tapered edge portion, a second tapered edge portion, and a center portion therebetween. The second tapered edge portion is a mirror image of the first tapered edge portion. Each of the first and second tapered edge portions comprise two or more steps.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a simplified interior view of an example printer-encoder in accordance with example embodiments of the present disclosure;
FIG. 2 is a perspective view of an example RFID coupler, in accordance with example embodiments of the present disclosure;
FIG. 3 is a top view of the example RFID coupler of FIG. 2, in accordance with example embodiments of the present disclosure;
FIG. 4 is a side sectional of the example RFID coupler of FIG. 2, along line 4-4, in accordance with example embodiments of the present disclosure; and
FIGS. 5A-5D are side views of example conductive strips of an example RFID coupler in accordance with example embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

To address challenges and limitations associated with conventional RFID couplers, various examples of the present disclosure may be provided. For example, various examples of the present disclosure may provide example couplers for RFID enabled systems and example RFID enabled systems such as RFID printer-encoders.

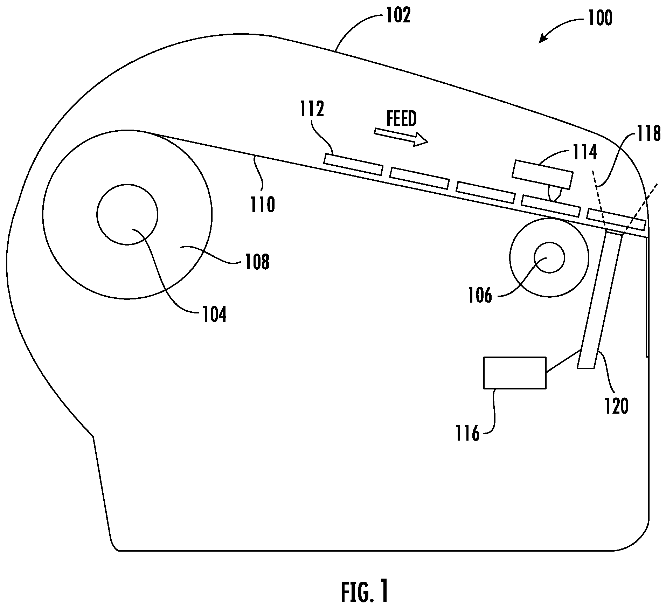

Referring now to FIG. 1, a simplified interior view of an example printer-encoder is illustrated in accordance with example embodiments of the present disclosure. FIG. 1 illustrates a printer-encoder 100 having a housing 102 for various internal components that provide the desired printing and encoding functionality. For simplicity, not all of the internal components are illustrated in FIG. 1 or described herein. In the illustrated embodiment of FIG. 1, a roll 108 is mounted on a supply roller 104. The roll 108 contains a web 110 (i.e., an elongated paper strip or the like) to which a large number (e.g., several thousand) of media units 112 are removably affixed. In an example embodiment, the media units 112 are product tags that have a printable area upon which indicia can be printed and an RFID transponder and IC for receiving and storing encoded data (e.g., product identifying information). In various embodiments, the web 110 and media units 112 unspool from the roll 108 and are conveyed along a feed path in a feed direction (indicated by the arrow in FIG. 1) by a conveyance system. In various embodiments, such a conveyance system comprises one or more feed rollers (such as feed roller 106) and one or more motors (not illustrated) to drive the feed rollers. In various embodiments, the conveyance system conveys the web 110 and the media units 112 past a printhead 114 (e.g., a thermal printhead) where the media units 112 can be printed upon one at a time and past a transponder encoding region 118 within which an RFID coupler 120, electrically connected to a transceiver 116, is able to encode a desired one of the media units 112.

In various embodiments, as illustrated, the transponder encoding region 118 is downstream of the printhead 114. In various embodiments, such a downstream arrangement provides efficient space utilization within the printer-encoder and may prevent the need to retract the media unit for encoding after printing.

In various embodiments, as illustrated and as described further below, the coupler 120 is mounted in what might be termed a vertical arrangement which allows for a more compact arrangement of components, a closer mounting of the coupler to the printhead which may enable simultaneous printing and encoding of the same media unit, and a narrower, more focused transponder encoding region to ensure coupling with only one media unit at a time, even with a small pitch.

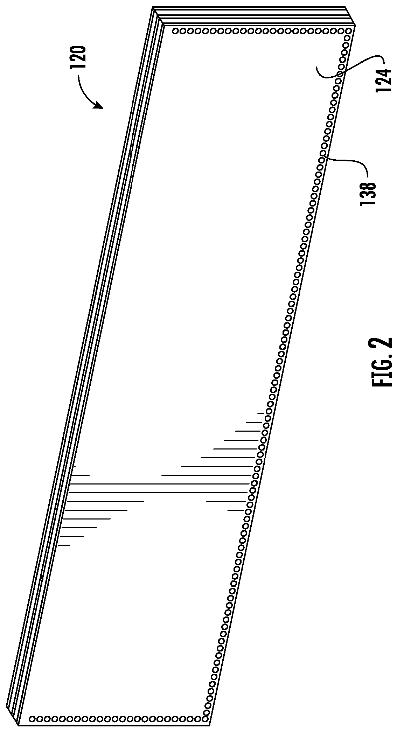

Referring now to FIGS. 2-4, an example RFID coupler is illustrated in accordance with example embodiments of the present disclosure. In various embodiments, the RFID coupler 120 has a generally rectangular prism or cuboid shape with two opposing major planar faces (one of which is visible in FIG. 2), two opposing long edges (which, in the illustrated orientation of FIG. 2, may be termed top and bottom edges), and two opposing short edges (which, in the illustrated orientation of FIG. 2, may be termed left and right edges).

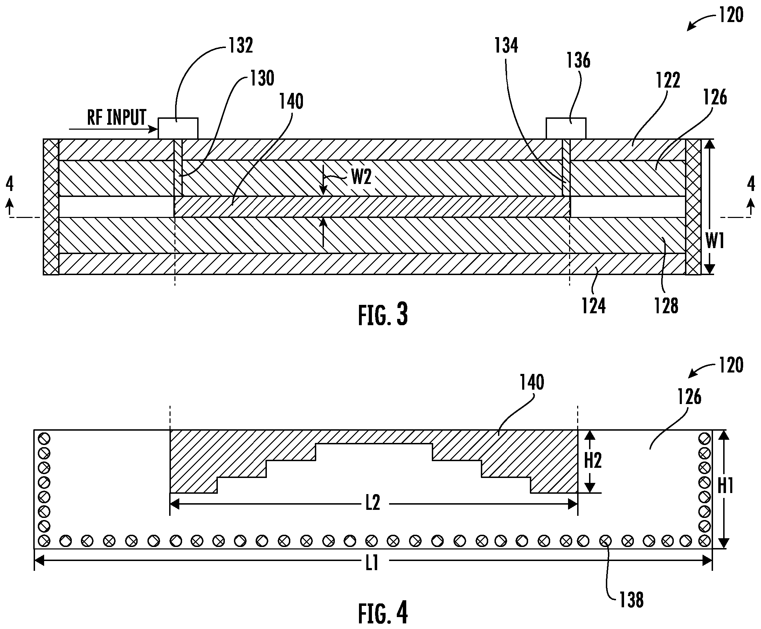

As seen in the top view of FIG. 3, the example RFID coupler 120 comprises a first ground plane 122 and a second ground plane 124 on opposing outer sides of the coupler. In various embodiments, the first and second ground planes 122, 124 comprise copper. The example RFID coupler 120 further comprises a conductive strip 140 (or simply "conductor") positioned at least partially between the first and second ground planes 122, 124. The conductive strip 140 propagates electromagnetic or radio frequency (RF) fields according to signals receives from a transceiver (such as transceiver 116 of FIG. 1) to couple with an RFID transponder. The example RFID coupler 120 further comprises a first printed circuit board (PCB) 126 sandwiched between the first ground plane 122 and the conductive strip 140 and a second PCB 128 sandwiched between the second ground plane 124 and the conductive strip 140. In various embodiments, the first and second PCBs comprise FR4 or any other suitable printed circuit board material. In the illustrated embodiment, the example RFID coupler 120 receives signals from a transceiver via an input port 132, and the conductive strip 140 receives those signals via an input lead 130. In the illustrated embodiment, the conductive strip 140 is connected to a terminating load 136 (e.g., 50 ohms) via a terminating lead 134. In various embodiments, the example conductive strip may be created by etching a copper layer between the first and second PCBs.

As seen in FIG. 4, the example RFID coupler 120 further comprises a plurality of conductive vias 138 along the left side, right side, and bottom edges. The vias 138 extend from the first ground plane 122 to the second ground plane 124. The vias 138 create electromagnetic boundary walls that prevent the electromagnetic fields created by the conductive strip 140 from exiting the sides or bottom edge of the RFID coupler 120, such that the electromagnetic fields created by the conductive strip 140 exit only from the top edge of the RFID coupler 120.

In a specific example embodiment, an example RFID coupler of embodiments of the present disclosure has a length L1 of about 80 millimeters (mm), a height H1 of about 20 mm, and a thickness or width W1 of about 3.2 mm. In such a specific example embodiment, the conductive strip has a length L2 of about 42 mm, a height H2 of about 8 mm, and a thickness or width W2 of about 0.35 mm. In various embodiments, the length L2 of the conductive strip is based on the desired RFID frequency band. In this specific example embodiment, the RFID frequency band is 860-960 megahertz. In various embodiments, the conductive strip is centered along the length of the RFID coupler such that there are even spaces on either side of the conductive strip, as well as a space below the conductive strip. In various embodiments, the spaces on either side of the conductive strip and the space below the conductive strip contribute to the functionality of the example RFID coupler of embodiments of the present disclosure.

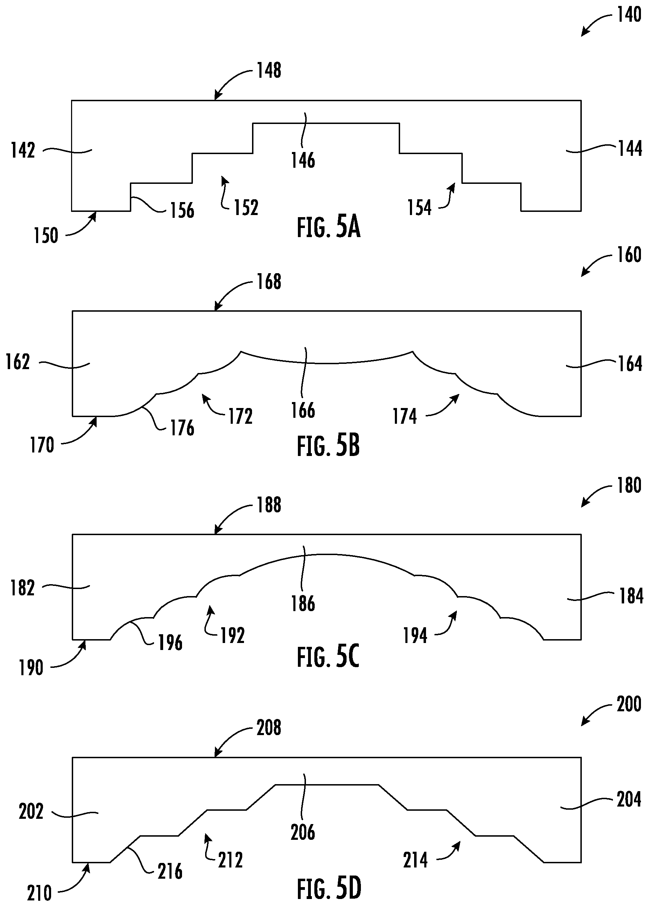

Referring now to FIG. 5A, the conductive strip 140 is illustrated removed from the example RFID coupler of FIGS. 2-4. As illustrated in FIG. 5A, the conductive strip 140 comprises a left tapered portion 142, a right tapered portion 144, and a center portion 146 therebetween. In various embodiments, the left tapered portion and the right tapered portion have an overall upward slope toward and converge at opposite ends of the center portion. The conductive strip 140 has a top edge 148 and a bottom edge 150. In various embodiments, the top edge 148 is even with the top edges of the first and second ground planes 122, 124 and the first and second PCBs 126, 128. As illustrated in FIG. 5A, the left tapered portion 142 has a left stepped edge 152 and the right tapered portion 144 has a right stepped edge 154. Each of the left stepped edge 152 and the right stepped edge 154 comprise two or more steps 156 rather than, for example, a straight edge or a uniformly curved edge. In various embodiments, the steps are discrete in that each step has a readily identifiable beginning and ending. In various embodiments, the steps on each side of the conductive strip are uniform and evenly spaced, i.e., the steps on each side are periodic. In various embodiments, the periodicity can be varied depending on the frequency of operation. In this examples, the periodicity is 4. In various embodiments, the steps on the right side are mirror images of the steps on the left side. In fact, in various embodiments, the conductive strip is symmetric about a vertical midline through the center portion. In various embodiments, the steps of the tapered edges provide a higher magnetic field intensity and an improved magnetic field spread. In the illustrated embodiment of FIG. 5A, the steps 156 of the left stepped edge 152 and the right stepped edge 154 are squared (i.e., each step comprises a substantially horizontal portion and a substantially vertical portion which are at right angles to each other). In the illustrated embodiment of FIG. 5A, the bottom edge of the center portion 146 is straight.

In various embodiments, other suitable tapered edge / step shapes may be used. FIGS. 5B-5D illustrate three examples of conductive strips with example alternative tapered edge shapes. In FIG. 5B, a conductive strip 160 comprises a left tapered portion 162, a right tapered portion 164, and a center portion 166 therebetween. The conductive strip 160 has a top edge 168 and a bottom edge 170. As illustrated in FIG. 5B, the left tapered portion 162 has a left stepped edge 172 and the right tapered portion 164 has a right stepped edge 174. Each of the left stepped edge 172 and the right stepped edge 174 comprise two or more steps 176. In the illustrated embodiment of FIG. 5B, the steps 176 of the left stepped edge 172 and the right stepped edge 174 are convex. In the illustrated embodiment of FIG. 5B, the bottom edge of the center portion 166 is convex.

In FIG. 5C, a conductive strip 180 comprises a left tapered portion 182, a right tapered portion 184, and a center portion 186 therebetween. The conductive strip 180 has a top edge 188 and a bottom edge 190. As illustrated in FIG. 5C, the left tapered portion 182 has a left stepped edge 192 and the right tapered portion 184 has a right stepped edge 194. Each of the left stepped edge 192 and the right stepped edge 194 comprise two or more steps 196. In the illustrated embodiment of FIG. 5C, the steps 196 of the left stepped edge 192 and the right stepped edge 194 are concave. In the illustrated embodiment of FIG. 5C, the bottom edge of the center portion 186 is concave.

In FIG. 5D, a conductive strip 200 comprises a left tapered portion 202, a right tapered portion 204, and a center portion 206 therebetween. The conductive strip 200 has a top edge 208 and a bottom edge 210. As illustrated in FIG. 5D, the left tapered portion 202 has a left stepped edge 212 and the right tapered portion 204 has a right stepped edge 214. Each of the left stepped edge 212 and the right stepped edge 214 comprise two or more steps 216. In the illustrated embodiment of FIG. 5D, the steps 216 of the left stepped edge 212 and the right stepped edge 214 are angled (i.e., in this example, each angled step comprises a substantially horizontal portion and an angled portion). In the illustrated embodiment of FIG. 5D, the bottom edge of the center portion 206 is straight.

In other example embodiments of a conductive strip, such squared, convex, concave, angled, or otherwise shaped steps may be used in any suitable combination with such straight, convex, concave, or otherwise shaped middle portion bottom edges.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A coupler for a radio frequency identification (RFID) enabled system adapted to couple a transceiver of the RFID enabled system with a targeted transponder from among a group of multiple adjacent transponders, the coupler comprising:
a first ground plane and a second ground plane on opposing sides of the coupler; and
a conductive strip for propagating a plurality of electromagnetic fields from an edge of the coupler, the conductive strip positioned at least partially between the first and second ground planes, the conductive strip having a bottom edge having a first tapered edge portion, a second tapered edge portion, and a center portion therebetween, the second tapered edge portion being a mirror image of the first tapered edge portion, each of the first and second tapered edge portions comprising two or more steps.

2. The coupler of claim 1, further comprising a first printed circuit board sandwiched between the first ground plane and the conductive strip and a second printed circuit board sandwiched between the second ground plane and the conductive strip.

3. The coupler of claim 1, wherein each of the two or more steps of each of the first and second tapered edge portions are squared.

4. The coupler of claim 1, wherein each of the two or more steps of each of the first and second tapered edge portions are convex.

5. The coupler of claim 1, wherein each of the two or more steps of each of the first and second tapered edge portions are concave.

6. The coupler of claim 1, wherein each of the two or more steps of each of the first and second tapered edge portions are angled.

7. The coupler of claim 1, wherein the center portion of the bottom edge is straight.

8. The coupler of claim 1, wherein the center portion of the bottom edge is convex.

9. The coupler of claim 1, wherein the center portion of the bottom edge is concave.

10. The coupler of claim 1, wherein the RFID enabled system is a printer.

11. A radio frequency identification (RFID) printer-encoder adapted to print and encode a plurality of media units, at least some of the plurality of media units comprising an RFID transponder, the printer-encoder comprising:
a printhead for printing indicia onto the media units;
a media conveyance system adapted to convey the plurality of media units to the printhead and a transponder encoding region along a feed path in a feed direction;
a transceiver configured to provide communication signals corresponding to information to be encoded on the RFID transponder; and
a coupler electrically connected to the transceiver and adapted to encode a targeted transponder in the transponder encoding region, the coupler comprising:
a first ground plane and a second ground plane on opposing sides of the coupler; and
a conductive strip for propagating a plurality of electromagnetic fields from an edge of the coupler, the conductive strip positioned at least partially between the first and second ground planes, the conductive strip having a bottom edge having a first tapered edge portion, a second tapered edge portion, and a center portion therebetween, the second tapered edge portion being a mirror image of the first tapered edge portion, each of the first and second tapered edge portions comprising two or more steps.

12. The printer-encoder of claim 11, wherein the coupler further comprises a first printed circuit board sandwiched between the first ground plane and the conductive strip, and a second printed circuit board sandwiched between the second ground plane and the conductive strip.

13. The printer-encoder of claim 11, wherein each of the two or more steps of each of the first and second tapered edge portions of the coupler are squared, convex, concave, or angled.

14. The printer-encoder of claim 11, wherein the center portion of the bottom edge of the coupler is straight, convex, or concave.

15. The printer-encoder of claim 11, wherein the coupler is positioned downstream of the printhead along the feed path.
